# EUROPÄISCHE PATENTANMELDUNG

(11) **EP 0 628 591 A2**
(43) Veröffentlichungstag der Anmeldung: **14.12.1994**
(21) Anmeldenummer: 94108266.1
(22) Anmeldetag: 28.05.1994
(51) Int. Cl.: C08G 77/54, D06M 15/643

(54) **Subsitiuierte 1.3.5-Triazin-Einheiten enthaltende Organopolysiloxane**

(30) Priorität: 07.06.1993 DE 4318794
(71) Anmelder: Pfersee Chemie GmbH, D-86462 Langweid a. Lech (DE)
(72) Erfinder: Bernheim, Michael, Dr., D-86462 Aystetten (DE); Chrobaczek, Harald, Dr., D-86153 Augsburg (DE); Messner, Michael, D-83646 Bad Tölz (DE)

(57) **Zusammenfassung**

Durch Umsetzung von Cyanurhalogeniden mit Organopolysiloxanen, welche in Substituenten primäre Aminogruppen enthalten, können Organopolysiloxane erhalten werden, in denen zwei Polysiloxanketten über einen zweiwertigen Rest verbunden sind. Der zweiwertige Rest enthält 1.3.5-Triazinringe, an die noch ein Halogenatom gebunden ist. Die so erhaltenen Organopolysiloxane eignen sich für die Weichgriffausrüstung von Fasermaterialien. Insbesondere textilen Flächengebilden welche Cellulosefasern enthalten, kann hierdurch ein weicher Griff vermittelt werden, wobei die Permanenz der Ausrüstungseffekte gegenüber Waschprozessen sehr gut ist.

## Beschreibung

Die Erfindung betrifft Organopolysiloxane, welche substituierte 1.3.5-Triazin-Einheiten enthalten, ein Verfahren zur Herstellung solcher Siloxane und deren Verwendung zur Behandlung von Fasermaterialien.

Die Verwendung von Reaktionsprodukten aus Organopolysiloxanen und Cyanurhalogeniden für die Behandlung von Mauerwerk und Baumaterialien beschreibt die GB-B 1 051 938.

Es ist bekannt, Fasermaterialien wie z.B. textile Flächengebilde in Form von Geweben mit Organopolysiloxanen zu behandeln, welche primäre und/oder sekundäre Aminogruppen enthalten. So beschreiben beispielsweise die DE-A 24 11 326 und die US-A 5 057 572 die Behandlung von Textilien mit Aminogruppen enthaltenden Organopolysiloxanen. Der Zweck dieser Behandlung ist es, den textilen Materialien weichen Griff zu verleihen.

Die in der genannten DE- und US-Schrift beschriebenen Organopolysiloxane weisen neben Vorteilen jedoch auch Nachteile auf. So ist z.B. die Permanenz der mit den Silikonen erzielten Effekte nach Waschprozessen nicht optimal. Bei Vorliegen eines größeren Anteils primärer Aminogruppen auf den behandelten Textilien kann außerdem eine unerwünschte Vergilbungsneigung auftreten. Außerdem können Schwierigkeiten auftreten, wenn man die in den oben angegebenen Schriften genannten Organopolysiloxane in stabile wäßrige Dispersionen überführen will, und zwar dann, wenn diese Siloxane höhere Viskositäten besitzen. Andererseits sind stabile wäßrige Dispersionen der Siloxane jedoch erwünscht, weil die Siloxane aus Kosten- und Umweltgründen bevorzugt in Form wäßriger Dispersionen für die Behandlung der Fasermaterialien eingesetzt werden.

Aufgabe der vorliegenden Erfindung war es, Organopolysiloxane zur Verfügung zu stellen, welche sich für die Behandlung von Fasermaterialien, insbesondere von textilen Flächengebilden eignen. Die Permanenz der erzielten Effekte nach Waschprozessen sollte, insbesondere auf Materialien, welche Cellulose- oder Polyamidfasern enthalten, besser sein als im Fall der Verwendung bekannter aminofunktioneller Organopolysiloxane. Der Griff und die Vergilbungstendenz behandelter Fasermaterialien sollten sich nicht verschlechtern gegenüber der Verwendung bekannter aminofunktioneller Organopolysiloxane, und es sollte möglich sein, die zu entwickelnden Organopolysiloxane auch dann in Form stabiler wäßriger Dispersionen zu erhalten, wenn diese Siloxane relativ hohe Viskositäten aufweisen.

Die genannte Aufgabe wurde gelöst durch Organopolysiloxane der Struktur

A - E - A

worin E für einen zweiwertigen Rest der allgemeinen Formel (I) steht 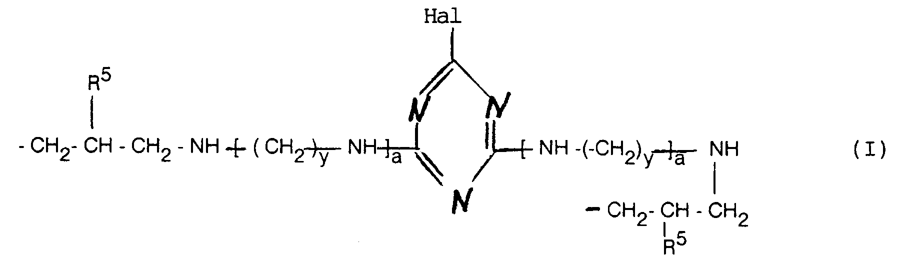
worin Hal für Cl oder F steht, y jeweils eine Zahl von 2 bis 4 ist, a jeweils 0 oder 1 ist, worin die Reste A unabhängig voneinander für einen einwertigen Rest der allgemeinen Formel (II) stehen 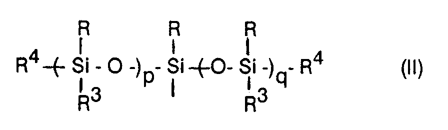
worin p eine Zahl von 0 bis 800 ist, q eine Zahl von 0 bis 800 ist, p + q eine Zahl von 15 bis 800, vorzugsweise von 50 bis 250, ist,
worin alle anwesenden Reste R³ unabhängig voneinander jeweils für einen Rest R oder für - E - A oder für 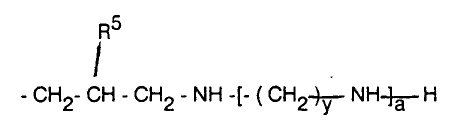
oder für 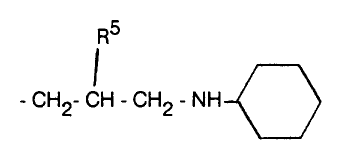
für 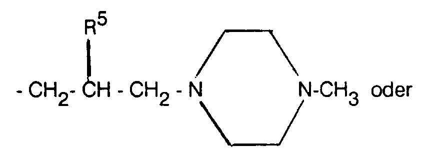
für 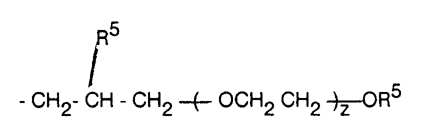
stehen, wobei z eine Zahl von 5 bis 25 ist,
worin alle Reste R unabhängig voneinander für einen Alkylrest mit 1 bis 4 C-Atomen oder den Phenylrest stehen, R⁴ für - O Si R₂ R¹ oder für R steht, wobei R¹ für R, OR oder OH steht und worin alle anwesenden Reste R⁵ unabhängig voneinander für H oder CH₃ stehen.

Die genannten erfindungsgemäßen Organopolysiloxane führen zu einem angenehm weichen Griff der mit ihnen behandelten textilen Flächengebilde wie z.B. Geweben, Maschenwaren oder Vliesen (non-wovens). Die Permanenz der Effekte gegenüber Waschprozessen ist insbesondere im Fall von Textilien ausgezeichnet, welche Cellulosefasern enthalten oder aus Cellulosefasern bestehen. Dies kann daran liegen, daß beim Behandeln und nachfolgenden Trocknen der Cellulose enthaltenden Materialien, insbesondere beim Vorliegen alkalischer Bedingungen, Chlor- oder Fluoratome, welche in den erfindungsgemäßen Siloxanen vorliegen, substituiert werden, wodurch eine chemische Bindung zum Cellulosemolekül entsteht. Die Vergilbungsneigung von Fasermaterialien, welche mit erfindungsgemäßen Organopolysiloxanen behandelt wurden, läßt sich auf sehr niedriges Niveau einstellen, indem man die Zahl freier primärer Aminogruppen in den Organopolysiloxanen niedrig hält. Der Griff der behandelten Textilien ist mit dem vergleichbar, der bei Anwendung bekannter aminofunktioneller Polysiloxane resultiert. Es ist möglich, stabile wäßrige Dispersionen erfindungsgemäßer Siloxane zu erhalten, auch wenn die Viskositäten dieser Siloxane größere Werte annehmen als etwa 400 mPa.s. Bei herkömmlichen aminofunktionellen Polysiloxanen treten dagegen, zumindest bei bestimmten Verfahren zur Homogenisierung, häufig Probleme bezüglich Stabilität der Dispersionen auf, wenn dieser Wert von 400 mPa.s überschritten wird.

In den erfindungsgemäßen Organopolysiloxanen sind zwei einwertige Polysiloxanreste A über eine zweiwertige Einheit E miteinander verbunden. Der zweiwertige Rest E ist eine Einheit der Formel (I) 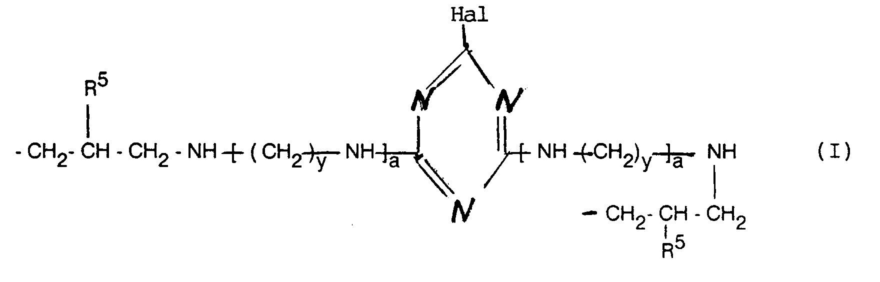
Die darin enthaltene 1.3.5-Triazin-Einheit enthält ein an den Ring gebundenes Chlor- oder Fluoratom, das in der Formel (I) mit "Hal" bezeichnet ist. Bevorzugt steht Hal für ein Chloratom. Der Wert von y ist jeweils 2 bis 4. Der Wert von y kann bei allen anwesenden - (CH₂)_{y}-Gruppen gleich sein, die einzelnen Werte von y können sich jedoch auch voneinander unterscheiden. In einer bevorzugten Ausführungsform erfindungsgemäßer Organopolysiloxane beträgt die Anzahl y für einen Teil oder alle der anwesenden (CH₂)_{y}-Gruppen jeweils 2. Dies gilt auch für den unten erläuterten Fall, in dem die erfindungsgemäßen Organopolysiloxane mehrere Einheiten E enthalten, d.h. wenn einer oder mehrere der Reste R³ für - E - A stehen.
Die Einheit E kann in jedem der beiden an den 1.3.5-Triazinring gebundenen Reste ein oder zwei Stickstoffatome enthalten, d.h. der Wert von a kann in jedem dieser Reste unabhängig voneinander 0 oder 1 sein. Bevorzugt ist es, wenn a in allen anwesenden Einheiten E den Wert 0 hat.

Die beiden an die Einheit E gebundenen Organopolysiloxanreste A können gleiche oder verschiedene Struktur aufweisen. Jeder Rest A ist ein einwertiger Rest der Formel (II) 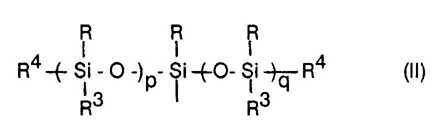
Das mittlere, d.h. das zwischen den Gruppierungen 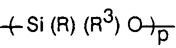
und 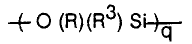
anwesende Si-Atom dieser Formel (II) ist an die Einheit E gebunden. In der Formel (II) kann der Index p einen Wert von 0 bis 800 besitzen, q besitzt einen Wert von 0 bis 800. Die Summe von p + q besitzt einen Wert von 15 bis 800, vorzugsweise von 50 bis 250. Alle anwesenden Reste R³ stehen entweder für eine Gruppe - E - A, einen Rest der Formel 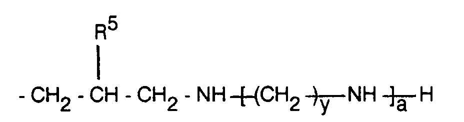
oder für einen Rest R der unten näher beschriebenen Art oder für einen der folgenden Reste 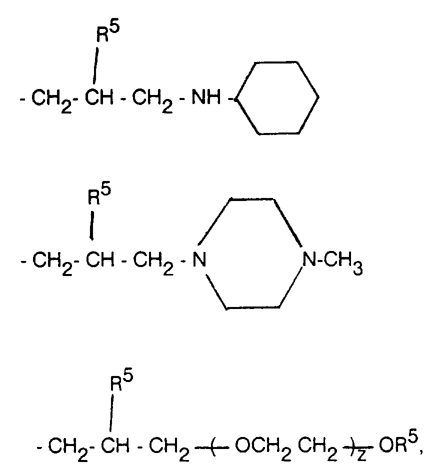
wobei z eine Zahl von 5 bis 25 ist.

Wenn einer oder mehrere der Reste R³ für die Gruppe - E - A stehen (wobei E und A die oben genannte Bedeutung haben), liegen in den erfindungsgemäßen Organopolysiloxanen mehrere 1.3.5-Triazineinheiten vor. Dies kann z.B. der Fall sein, wenn man die Siloxane nach dem unten beschriebenen Verfahren herstellt und dabei als Ausgangsverbindungen Polysiloxane verwendet, die mehrere Substituenten mit primären Aminogruppen enthalten. Setzt man diese Polysiloxane, welche mehrere an Si-Atome gebundene Reste der Struktur 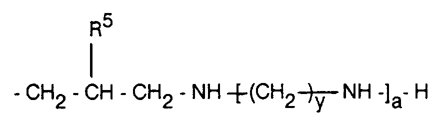
enthalten, mit Cyanurchlorid oder Cyanurfluorid nach dem unten näher beschriebenen Verfahren um, so können erfindungsgemäße Organopolysiloxane entstehen, in welchen R³ für - E - A steht. Findet diese Umsetzung in solchen Mengenverhältnissen statt, daß nicht alle anwesenden primären Aminogruppen mit Cyanurchlorid oder Cyanurfluorid reagieren, so können erfindungsgemäße Organopolysiloxane erhalten werden, in denen einer oder mehrere der Reste R³ für 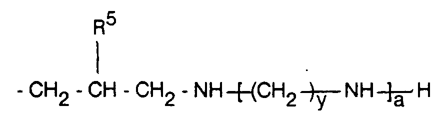
stehen.

In einer bevorzugten Ausführungsform der erfindungsgemäßen Organopolysiloxane stehen 80 bis 100 % aller anwesenden Reste R³ für einen Rest R der unten beschriebenen Art. Das bedeutet, daß in diesem Fall keine oder nur eine geringe Anzahl primärer Aminogruppen in den Siloxanen enthalten sind, was günstige Auswirkungen auf die Vergilbungstendenz von mit den Siloxanen behandelten Fasermaterialien hat. Wenn keiner der Reste R³ für die Einheit - E - A steht, enthalten die erfindungsgemäßen Polysiloxane nur einen einzigen 1.3.5-Triazinring.

Ein Teil oder alle der in den erfindungsgemäßen Polysiloxanen anwesenden Reste R³ können für einen der folgenden Reste stehen: 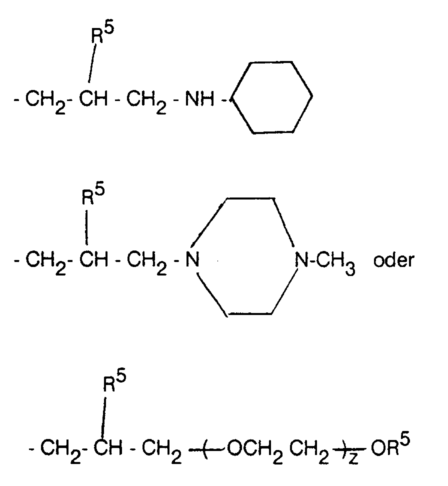
wobei z und R⁵ die bereits genannten Bedeutungen besitzen. Durch die Anwesenheit der genannten N-Cyclohexyl- oder N-Methyl-piperazinylgruppen kann ein besonders weicher Griff von mit den Polysiloxanen behandelten Fasermaterialien bei hoher Permanenz nach Waschprozessen erzielt werden. Durch die Anwesenheit von Polyoxyethylengruppen kann erreicht werden, daß die Polysiloxane mit geringeren Mengen an Dispergator in wäßrige Dispersionen überführt werden können als bei Abwesenheit von Polyoxyethylengruppen.

Alle in den erfindungsgemäßen Polysiloxanen anwesenden Reste R stehen unabhängig voneinander für den Phenylrest oder für einen gesättigten, verzweigten oder unverzweigten Alkylrest mit 1 bis 4 Kohlenstoffatomen. Bevorzugt sind solche Siloxane, in denen alle anwesenden Reste R Methylreste sind. Diese bevorzugten Organopolysiloxane sind besonders gut für die Behandlung von Fasermaterialien geeignet.

Alle in den oben genannten Formeln genannten Reste R⁵ stehen unabhängig voneinander für Wasserstoff oder die Methylgruppe.

Gemäß der oben angegebenen Formel (II) enthalten die in den erfindungsgemäßen Organopolysiloxanen anwesenden Reste A jeweils zwei Reste R⁴ an den jeweiligen Enden der Polysiloxanketten. Alle diese Reste R⁴ stehen unabhängig voneinander für einen Rest R der oben beschriebenen Art oder für einen Rest -O Si R₂ R¹ ; in diesen Resten - O Si R₂ R¹ sind zwei Reste R der genannten Art und ein Rest R¹ enthalten. Alle anwesenden Reste R¹ stehen unabhängig voneinander für einen Rest R, einen Rest OR oder für eine Hydroxylgruppe.

Aus den obigen Erläuterungen geht hervor, daß in den erfindungsgemäßen Organopolysiloxanen Einheiten E entweder an die Enden der Polysiloxanketten A gebunden sein können (z.B. wenn in Formel (II) R⁴ = R, p = 0, q ≠ 0, R³ = - E - A), oder als Seitenketten vorliegen können (z.B. wenn R⁴ = OSiR₂R¹). Der letztere Fall, wonach die Einheit E eine Seitenkette der beiden Reste A darstellt, ist bevorzugt. Das heißt, daß eine bevorzugte Ausführungsform der erfindungsgemäßen Polysiloxane darin besteht, daß nicht gleichzeitig p = 0 (bzw. q = 0) und R⁴ = R ist.

Erfindungsgemäße Organopolysiloxane lassen sich erhalten, indem man ein Organopolysiloxan, das Substituenten mit primären Aminogruppen enthält, mit einer Verbindung der Formel (III) 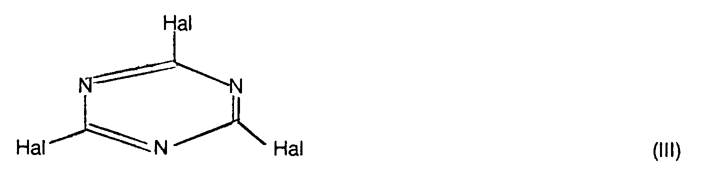
umsetzt. In dieser Formel stehen die 3 mit "Hal" bezeichneten Substituenten unabhängig voneinander jeweils für ein Chloratom oder ein Fluoratom. Geeignet als Verbindung (III) ist beispielsweise Cyanurfluorid. Besonders bevorzugt als Ausgangsverbindung ist Cyanurchlorid. Bei Verwendung von Cyanurchlorid als Ausgangsverbindung enthalten die nach dem unten beschriebenen Verfahren erhaltenen erfindungsgemäßen Organopolysiloxane eine oder mehrere 1.3.5-Triazineinheiten, wobei an jede dieser Einheiten ein Chloratom gebunden ist.

Das Organopolysiloxan, das als Ausgangsverbindung für die Herstellung von erfindungsgemäßen Polysiloxanen verwendet werden kann, ist eine Verbindung oder ein Gemisch von Verbindungen der Formel (IV) 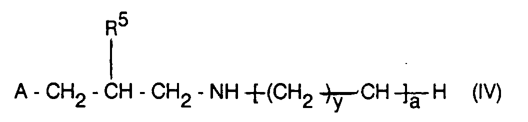
In dieser Formel besitzen A, R⁵, y und a die oben angegebenen Bedeutungen mit der Einschränkung, daß keiner der in A anwesenden Reste R³ für die Gruppe - E - A steht.

Geeignete Organopolysiloxane der Formel (IV) sind im Handel erhältlich. Beispiele für geeignete Vertreter sind die Produkte "DC-softener SSF" (Dow Corning) und Q2 - 8166 (Dow Corning). Ferner sind geeignete aminofunktionelle Polysiloxane der Formel (IV) in der EP-A 138 192 und in der US-A 5 057 572 beschrieben. Dort finden sich auch Angaben zu ihrer Herstellung.

Ausgangsverbindungen der Formel (IV), in denen Reste R³ anwesend sind, die die oben erwähnten N-Cyclohexyl- oder N-Methylpiperazinylreste oder Polyoxyethyleneinheiten enthalten, lassen sich in Anlehnung an Literaturangaben aus der Silikonchemie herstellen, z.B. durch Äquilibrierungsreaktion, indem man von Gemischen entsprechender funktioneller Silane bzw. Siloxane und Hexamethylcyclotrisiloxan oder Octamethylcyclotetrasiloxan ausgeht. Die Herstellung von N-Cyclohexylgruppen enthaltenden Polysiloxanen ist in der DE-A 37 30 413, die Herstellung von N-Piperazinylresten enthaltenden Polysiloxanen ist in der EP-A 441 530 beschrieben. Polysiloxane, welche Substituenten mit Polyoxyethyleneinheiten und Substituenten mit primären Aminogruppen enthalten, werden in der deutschen Patentanmeldung mit dem Aktenzeichen P 42 22 483.7 (Anmeldedatum 09.07.1992) beschrieben. Die genannte Äquilibrierungsreaktion kann demnach ausgehend von einem Oligocyclosiloxan, einem funktionellen Silan der Formel 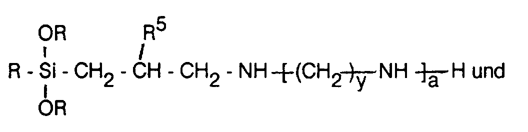
einem Silan oder Polysiloxan, das einen Substituenten der Formel 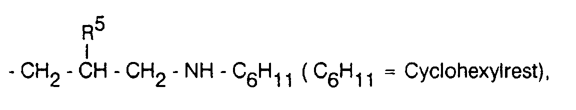
der Formel 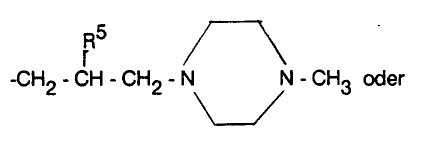
der Formel 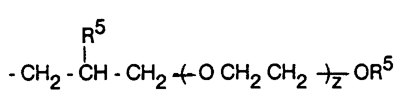
enthält, durchgeführt werden.

Das erfindungsgemäße Verfahren wird im Folgenden am Beispiel der besonders bevorzugten Verwendung von Cyanurchlorid als Ausgangsverbindung der Formel (III) näher beschrieben.

Aus der chemischen Literatur ist bekannt, daß die Substitution der einzelnen Chloratome des Cyanurchlorids über die Reaktionstemperatur gesteuert werden kann. Bereits bei etwa 0°C findet die nukleophile Substitution des ersten Cl-Atoms statt. Bei Raumtemperatur wird das Zweite Chloratom substituiert, während zur Substitution des dritten Cl-Atoms eine Temperatur von etwa 100°C erforderlich ist.
Aus diesem Grund wird das erfindungsgemäße Verfahren insgesamt bei einer Temperatur im Bereich von -10°C bis + 70°C durchgeführt. Eine bevorzugte Ausführungsform des Verfahrens besteht darin, während der gesamten Umsetzung eine Temperatur im Bereich von 0°C bis 35°C beizubehalten. Da bei dem Verfahren zwei der drei Chloratome des Cyanurchlorids durch Aminogruppen substituiert werden müssen, ist natürlich das Verfahren so durchzuführen, daß eine Temperatur erreicht wird, bei der dies stattfindet. Diese Temperatur, die mindestens erreicht werden muß, hängt auch von den eingesetzten Ausgangsverbindungen ab. Im Normalfall genügt eine Temperatur von -10°C oder 0°C nicht, um Substitution von zwei Chloratomen zu bewirken. In diesem Fall kann zu Beginn der Umsetzung zwar eine Temperatur an der unteren Grenze des angegebenen Bereichs (-10°C oder 0°C) vorliegen, im Verlauf der Reaktion muß die Temperatur dann jedoch erhöht werden. Eine Temperatur von 70°C soll nicht überschritten werden, da die Gefahr besteht, daß bei höheren Temperaturen als 70°C bereits alle drei Chloratome substituiert werden. Im Normalfall reicht es aus, wenn während der Umsetzung eine Temperatur von 35°C nicht überschritten wird. Es kann von Vorteil sein, zu Beginn der Reaktion eine tiefe Temperatur, von z.B. -10°C oder bevorzugt etwa 0°C einzustellen und im Verlauf der Umsetzung die Temperatur zu erhöhen, z.B. bis zu 70°C, bevorzugt bis zu 35°C. Falls es erwünscht ist, die gesamte Reaktion bei einer konstanten Temperatur durchzuführen, ist diese so zu wählen, daß das Hauptprodukt der Reaktion einen Triazinring enthält, in dem zwei Chloratome durch Aminogruppen substituiert sind. Diese konstante Temperatur liegt zweckmäßigerweise im Bereich von 15°C bis 35°C.

Für die Umsetzung von Cyanurchlorid mit einem Organopolysiloxan oder einem Gemisch von Organopolysiloxanen der Formel (IV) wählt man die Mengen an Ausgangsverbindungen zweckmäßigerweise so, daß für je zwei Mol an primären Aminogruppen des Siloxans der Formel (IV) 0,9 bis 1,1 Mol Cyanurchlorid eingesetzt werden. Das heißt, daß bevorzugt pro Mol der Verbindung (IV) t x 0,45 bis t x 0,55 Mol Cyanurchlorid verwendet werden, wobei t die Anzahl primärer Aminogruppen im Siloxan der Formel (IV) ist. Besonders günstig ist es, wenn pro Mol der Verbindung (IV) t x 0,5 Mol Cyanurchlorid, also eine für die zweifache Substitution am Triazinring stöchiometrisch äquivalente Menge eingesetzt wird. In diesem Fall ist sowohl der Anteil an freiem Cyanurchlorid als auch der Anteil an primären Aminogruppen im Reaktionsprodukt sehr niedrig.

Die genannte Umsetzung wird in einer bevorzugten Ausführungsform des Verfahrens so durchgeführt, daß man eine wäßrige Dispersion des Organopolysiloxans als eine der Ausgangsverbindungen verwendet. Dies ist deshalb von Vorteil, weil nach Beendigung der Umsetzung mit Cyanurchlorid als Reaktionsprodukt eine wäßrige Dispersion eines erfindungsgemäßen Organopolysiloxans vorliegt. Diese kann entweder direkt für die Behandlung von Fasermaterialien, gegebenenfalls nach Verdünnung mit Wasser und Abdestillieren von eventuell anwesendem organischem Lösungsmittel, verwendet werden, oder nach Zusatz weiterer Produkte. Es können weitere Produkte zugesetzt werden, die für die Behandlung von Fasermaterialien bekannt und geeignet sind, wie z.B. Flammschutzmittel, Dispersionen modifizierter Polyethylenwachse, Cellulosevernetzer usw. Daneben können Zusätze anorganischer Basen in Frage kommen, um Dispersionen erfindungsgemäßer Polysiloxane zu erhalten, welche alkalischen pH-Wert aufweisen. Diese alkalischen Dispersionen sind von Vorteil, weil bei Behandlung der Fasermaterialien mit diesen Dispersionen und anschließender Trocknung eine chemische Reaktion mit dem Fasermaterial, z.B. mit cellulosischen OH-Gruppen erfolgen kann. Hierbei wird das noch an den Triazinring gebundene Chloratom substituiert, und es wird auf Grund der chemischen Bindung an das Cellulosemolekül eine sehr gute Permanenz der Ausrüstung gegenüber Waschprozessen erzielt.

Es werden somit bevorzugt wäßrige Dispersionen von Siloxanen der Formel (IV) als Ausgangssubstanzen eingesetzt. Stabile wäßrige Dispersionen der entsprechenden aminofunktionellen Polysiloxane sind auf dem Markt erhältlich oder lassen sich aus den reinen Polysiloxanen der Formel (IV) mit Hilfe allgemein bekannter Dispergatoren oder Gemischen von Dispergatoren herstellen. Gut geeignet als Dispergatoren sind handelsübliche nichtionische Emulgatoren wie z.B. ethoxilierte Fettalkohole. Die als Ausgangssubstanzen geeigneten wäßrigen Polysiloxandispersionen enthalten zweckmäßigerweise etwa 10 bis 60 Gew.% an Siloxan oder Siloxangemisch der Formel (IV) und 1 bis 7 Gew.% an Dispergator oder Dispergatorgemisch. Der Rest ist Wasser.

Das für die Umsetzung verwendete Produkt der Formel (III), vorzugsweise Cyanurchlorid, verwendet man zweckmäßigerweise in Form einer Lösung von Cyanurchlorid in einem organischen Lösungsmittel. Geeignet sind beispielsweise Diäthyläther, Äthylacetat, Toluol oder Xylol als Lösungsmittel. Diese Lösungen enthalten bevorzugt 1 bis 15 Gew. % an Cyanurchlorid und werden mit der wäßrigen Dispersion des Organopolysiloxans vereinigt, gegebenenfalls portionsweise oder durch Zutropfen. Nach beendeter Reaktion wird im Normalfall das organische Lösungsmittel entfernt, z.B. durch Destillation. Man erhält so eine stabile wäßrige Dispersion eines erfindungsgemäßen Organopolysiloxans.

Die erfindungsgemäßen Organopolysiloxane eignen sich sehr gut für die Behandlung von Fasermaterialien, insbesondere von textilen Flächengebilden wie Geweben, Maschenwaren oder nichtgewebten Flächengebilden (non-wovens). Bevorzugt werden die Polysiloxane für die Behandlung von textilen Flächengebilden verwendet, welche zu 100 % aus Cellulose- oder Polyamidfasern bestehen oder diese Fasern in Mischung mit anderen Fasern enthalten, z.B. textile Flächengebilde, welche Cellulose- und Polyesterfasern enthalten.

Vorzugsweise werden die erfindungsgemäßen Organopolysiloxane zu diesem Zweck in Form wäßriger Dispersionen eingesetzt, die außer Polysiloxan, Dispergator und Wasser noch weitere Bestandteile enthalten können, die oben bereits genannt wurden. Insbesondere der Zusatz von Basen zur Einstellung eines alkalischen pH-Werts, z.B. zwischen 7,5 und 10, ist vielfach von Vorteil. Die wäßrigen Dispersionen können z.B. für einen Foulard-Prozeß eingesetzt werden; die hierfür zweckmäßigerweise einzustellenden Konzentrationen sind dem Fachmann bekannt.

Neben der genannten Verwendung in Form wäßriger Dispersionen für die Foulardierung können die erfindungsgemäßen Organopolysiloxane auch für Beschichtungen von Flächengebilden aus Fasermaterialien verwendet werden. In diesem Fall können sie in Form von Wasser enthaltenden Pasten vorliegen, welche außer Polysiloxan und Wasser noch einen Verdicker wie z.B. Carboxymethylcellulose, Polyvinylalkohol oder Polyacrylsäure enthalten. Außerdem können diese Pasten noch einen oder mehrere Vernetzer enthalten, der bifunktionell ist und mit dem oder den in dem Polysiloxan anwesenden Chlor- oder Fluoratom(en) reagiert. Als Vernetzer eignen sich aliphatische Diamine oder Polyamine. Die entsprechende Paste wird beispielsweise über Rakeln auf das textile Flächengebilde aufgebracht, und beim Trocknen findet eine Vernetzungsreaktion statt.

Die Erfindung wird nunmehr durch Ausführungsbeispiele veranschaulicht.

### Beispiel 1 (Herstellung eines erfindungsgemäßen Polysiloxans)

25 Gew.teile eines aminofunktionellen Polysiloxans der folgenden Struktur 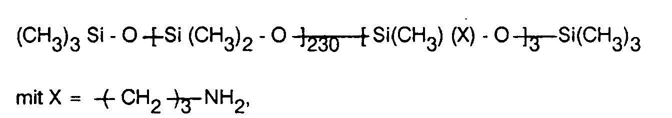
das eine Viskosität von etwa 350 mPa.s bei 25°C besitzt, wurden mit Hilfe von 3 Gew.teilen eines ethoxilierten Fettalkohols als Dispergator in 72 Gew.teilen Wasser dispergiert. Der Dispergator wies durchschnittlich ca. 10 bis 12 C-Atome in der Alkoholkomponente und ca. 6 Oxyethyleneinheiten auf, die Dispergierung erfolgte in Form einer Hochdruckemulgierung. Zu der erhaltenen Dispersion gab man portionsweise eine Lösung von ca. 0,22 Gew.teilen Cyanurchlorid in ca. 2 Gew.teilen Diäthyläther. Die Mengen an Polysiloxan und Cyanurchlorid waren hierbei stöchiometrisch bemessen, so daß pro Mol primärer Aminogruppen 1/2 Mol Cyanurchlorid vorlag. Zu Beginn der Reaktion und bis zum Ende der vollständigen Zugabe der Cyanurchloridlösung betrug die Temperatur ca. 0°C. Anschließend wurde die Temperatur auf Raumtemperatur gesteigert, dann wurde der Diäthyläther unter vermindertem Druck bei Raumtemperatur vollständig abdestilliert. Man erhielt eine stabile wäßrige Dispersion.

### Beispiel 2 (Herstellung eines erfindungsgemäßen Polysiloxans)

Zu einer Dispersion von 6,5 Gew.teilen eines Polysiloxans der Struktur 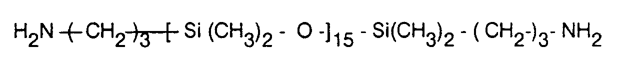
in ca. 37 Gew.teilen Wasser wurde eine Lösung von ca. 0,9 Gew.teilen Cyanurchlorid in 8,5 Gew.teilen Xylol zugegeben. Die Mengen an Dispersion und Cyanurchloridlösung waren so bemessen, daß 1 Mol Cyanurchlorid (als Feststoff berechnet) 2 Molen an Aminogruppen entsprach. Die Vereinigung der Dispersion des Polysiloxans mit der Cyanurchloridlösung erfolgte bei einer Temperatur von 0°C. Die Reaktionsmischung wurde 20 Minuten bei 0°C gehalten und dann auf Raumtemperatur gebracht. Nach 1 Stunde bei Raumtemperatur wurden durch Ausschütteln mit Petroläther sowohl das Xylol als auch das entstandene erfindungsgemäße Polysiloxan aus dem Gemisch entfernt. Nach Abdestillieren des Petroläthers wurde eine Lösung des Polysiloxans im Xylol erhalten. Analytische Untersuchungen an dem Polysiloxan ergaben, daß es eine Struktur gemäß Anspruch 1 aufwies. Durch Dispergierung dieser Xylol und Polysiloxan enthaltenden Lösung in Wasser (ethoxilierter Fettalkohol als Dispergator) und anschließende Entfernung des Xylols durch azeotrope Destillation ließ sich eine im wesentlichen Xylol-freie wäßrige Dispersion erhalten.

### Beispiel 3 (Behandlung von Fasermaterial)

Eine gemäß Beispiel 1 erhaltene Dispersion eines erfindungsgemäßen Polysiloxans wurde mit Wasser verdünnt, so daß die hierbei erhaltene Dispersion ca. 15 g/l des Polysiloxans enthielt. Diese Dispersion wurde durch Zugabe von Na₂CO₃ auf einen pH-Wert von ca. 9 eingestellt. Mittels Foulardierung wurde ein ungefärbtes Gewebe aus 100 % Baumwolle behandelt und bei 120°C getrocknet.

### Vergleichsbeispiel

Mit einer wäßrigen Dispersion, welche den gleichen Dispergator wie im Fall von Beispiel 1 und ein aminofunktionelles Organopolysiloxan enthielt, wurde das gleiche Baumwollgewebe unter den gleichen Foulardbedingungen behandelt wie im Fall von Beispiel 3. Das Organopolysiloxan wies etwa die gleiche Viskosität auf wie das erfindungsgemäße Organopolysiloxan, das nach Beispiel 1 erhalten wurde. Dieses als Vergleich dienende Polysiloxan enthielt primäre Aminogruppen in Seitenketten des Polysiloxans, jedoch enthielt das Siloxan keine Triazinringe.

### Beurteilung der behandelten Baumwollgewebe:

Die nach Beispiel 3 und nach dem Vergleichsbeispiel erhaltenen Gewebe wurden bezüglich Griff und Permanenz der Effekte bezüglich Griff miteinander verglichen. Dabei ergab sich, daß der Griff ohne vorangehende Wäsche des Gewebes im Fall von Beispiel 3 in etwa der gleiche war wie im Fall des Vergleichsbeispiels. Bereits nach einer Wäsche (40°C, Haushaltswaschmaschine, mit Waschmittelzusatz) zeigte sich jedoch, daß das mit dem erfindungsgemäßen Polysiloxan ausgerüstete Gewebe einen erkennbar weicheren Griff besaß als das Gewebe des Vergleichsbeispiels. Dieser Abstand vergrößerte sich mit zunehmender Anzahl von Wäschen.

## Patentansprüche

1. Organopolysiloxane der Struktur
A - E - A
worin
E für einen zweiwertigen Rest der allgemeinen Formel (I) steht 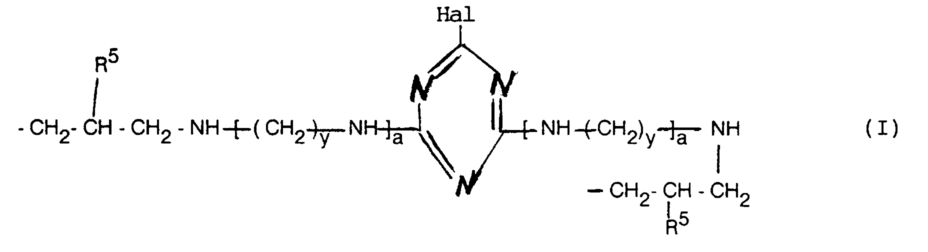 worin Hal für Cl oder F steht, y jeweils eine Zahl von 2 bis 4 ist, a jeweils 0 oder 1 ist, worin die Reste A unabhängig voneinander für einen einwertigen Rest der allgemeinen Formel (II) stehen 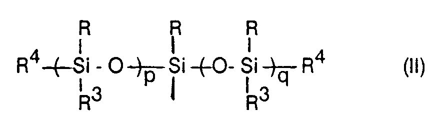 worin p eine Zahl von 0 bis 800 ist, q eine Zahl von 0 bis 800 ist, p + q eine Zahl von 15 bis 800, vorzugsweise von 50 bis 250, ist,
worin alle anwesenden Reste R³ unabhängig voneinander jeweils für einen Rest R oder für - E - A oder für 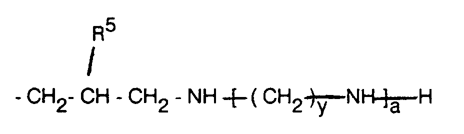 oder für 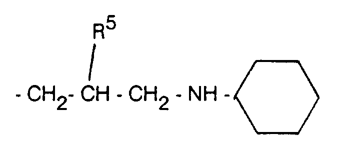 für 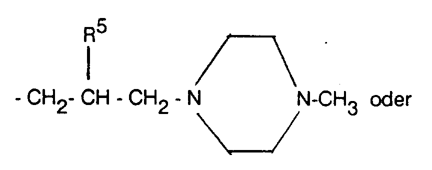 für 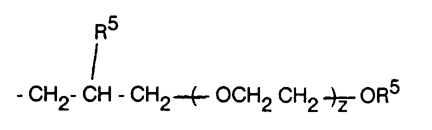 stehen, wobei z eine Zahl von 5 bis 25 ist,
worin alle Reste R unabhängig voneinander für einen Alkylrest mit 1 bis 4 C-Atomen oder den Phenylrest stehen, R⁴ für - O Si R₂ R¹ oder für R steht, wobei R¹ für R, OR oder OH steht und worin alle anwesenden Reste R⁵ unabhängig voneinander für H oder CH₃ stehen.

2. Organopolysiloxane nach Anspruch 1, dadurch gekennzeichnet, daß alle anwesenden Reste R Methylreste sind.

3. Organopolysiloxane nach Anspruch 1 oder 2, dadurch gekennzeichnet, daß 80 bis 100 % aller anwesenden Reste R³ für R stehen.

4. Verfahren zur Herstellung von Organopolysiloxanen gemäß einem oder mehreren der Ansprüche 1 bis 3, dadurch gekennzeichnet, daß man eine Verbindung der Formel (III) 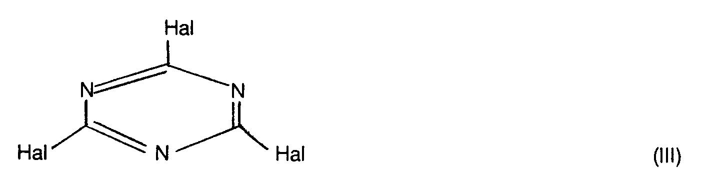 mit einem Organopolysiloxan der Formel (IV) 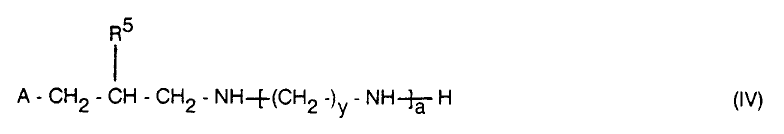 bei einer Temperatur im Bereich von -10°C bis 70°C, vorzugsweise im Bereich von 0°C bis 35°C, umsetzt, wobei Hal, A, R⁵, y und a die in Anspruch 1 genannten Bedeutungen besitzen, wobei jedoch keiner der im Rest A anwesenden Reste R³ für den Rest - E - A steht.

5. Verfahren nach Anspruch 4, dadurch gekennzeichnet, daß für die Umsetzung pro Mol an Verbindung (IV) t x 0,45 bis t x 0,55 Mol an Verbindung (III) eingesetzt werden, wobei t die Anzahl primärer Aminogruppen in Verbindung (IV) ist.

6. Verfahren nach Anspruch 4 oder 5, dadurch gekennzeichnet, daß für die Umsetzung eine wäßrige Dispersion, welche eine oder mehrere Verbindungen der Formel (IV) und einen oder mehrere Dispergatoren enthält, eingesetzt wird.

7. Verwendung von Organopolysiloxanen gemäß einem oder mehreren der Ansprüche 1 bis 3, vorzugsweise in Form wäßriger Dispersionen, welche die Organopolysiloxane enthalten, für die Behandlung von Fasermaterialien.

8. Verwendung nach Anspruch 7, dadurch gekennzeichnet, daß die Fasermaterialien textile Flächengebilde sind, welche Cellulosefasern oder Polyamidfasern enthalten.
